# EUROPÄISCHE PATENTSCHRIFT

(11) **EP 0 817 867 B1**
(45) Veröffentlichungstag und Bekanntmachung des Hinweises auf die Patenterteilung: **04.11.1998**
(21) Anmeldenummer: 96907411.1
(22) Anmeldetag: 09.03.1996
(51) Int. Cl.: C21B 7/24, F16J 15/46, F27D 3/16

(54) **VORRICHTUNG ZUM ABDICHTEN EINER LANZE IN EINER ÖFFNUNG ZUM DURCHFÜHREN DER LANZE IN EINEN UNTER DRUCK STEHENDEN BEHÄLTER**
DEVICE FOR SEALING A LANCE INTO AN APERTURE THROUGH WHICH THE LANCE CAN BE INTRODUCED INTO A PRESSURIZED VESSEL
DISPOSITIF D'ETANCHEMENT D'UNE LANCE DANS UNE OUVERTURE A TRAVERS LAQUELLE LADITE LANCE PEUT ETRE INTRODUITE DANS UN RECIPIENT PRESSURISE

(30) Priorität: 31.03.1995 LU 88600
(43) Veröffentlichungstag der Anmeldung: 14.01.1998
(73) Patentinhaber: PAUL WURTH S.A., 1122 Luxembourg (LU)
(72) Erfinder: ANDONOV, Radomir, L-8215 Mamer (LU); LONARDI, Emile, L-4945 Bascharage (LU)
(74) Vertreter: Freylinger, Ernest T.
(86) Internationale Anmeldenummer: EP9601018
(87) Internationale Veröffentlichungsnummer: WO9630548

(56) Entgegenhaltungen:
- WO-A-95/02145
- DE-A- 1 425 523
- DE-A- 2 816 930
- DE-A- 4 415 219
- FR-A- 1 600 190
- US-A- 2 273 129
- US-A- 3 434 728
- US-A- 4 908 179

## Beschreibung

Diese Erfindung betrifft eine Vorrichtung zum Abdichten einer Lanze in einer Öffnung zum Durchführen der Lanze in einen unter Druck stehenden Behälter, insbesondere einen Schachtofen.

Um die Gaskonzentrationen in einem Schachtofen ausmessen zu können, ist es bekannt, eine Lanze mit einer Meßsonde durch eine seitlich angebrachte Bohrung in den Schachtofen einzuführen. Da im Inneren des Ofens ein Überdruck herrscht, muß diese Bohrung gegen die Lanze abgedichtet werden, um ein Ausströmen der zum Teil gesundheitsschädlichen Gase zu verhindern.

Zu diesem Zweck werden Abdichtungsvorrichtungen vorgesehen, die ein Ein- und Ausführen der Lanze ermöglichen, und dabei ein Ausströmen der Gase aus dem Schachtofen verhindern.

Die einfachste Form der Abdichtvorrichtung sind plastisch verformbare Pakkungen, die in einem dichten Gehäuse angeordnet sind und eng an der einzuführenden Lanze anliegen, wodurch eine Abdichtung gegen das Gehäuse erreicht wird. Allerdings unterliegt der Querschnitt der Lanze relativ starken Schwankungen. Diese Veränderungen des Lanzenquerschnittes können einerseits infolge von Ablagerungen oder von Abnutzung entstehen, wodurch sich der Querschnitt vergrößert resp. verkleinert, andererseits kommt es durch operativ bedingte Temperaturschwankungen und der damit verbundenen thermischen Ausdehnung resp. Kontraktion zu Querschnitsveränderungen der Lanze. Diese Veränderungen bewirken jedoch, daß die plastischen Packungen relativ schnell nicht mehr eng an der Lanze anliegen wodurch die abdichtende Eigenschaft verloren geht.

Aus DE-A-29 50 672 ist eine Abdichtung bekannt, welche eine anpreßbare, mit der Dichtung verbundene elastische Schlauchdichtung aufweist, die an der Lanze anliegend ist. Diese elastische Dichtung wird bei eingeführter Lanze mit Druck beaufschlagt, wodurch sie sich noch enger um die Lanze anlegt, und dadurch die Dichtheit erhöht. Da die Schlauchdichtung ständig an der Lanze anliegend ist, ist die Beanspruchung des Materials beim Ein- und Ausführen der Lanze durch die Reibung erheblich, was zu einer raschen Abnutzung und Zerstörung der Schlauchdichtung und dem damit verbundenen Verlust der Dichtfunktion führt.

Da die Elastizität der Dichtung gewährleistet sein muß, kann die Abnutzung auch durch Verstärken oder Beschichten der Reibungsfläche nicht verhindert werden. Mit anderen Worten, man kann weder beliebig die Wandstärke erhöhen, wie das bei plastischen Dichtungen üblich ist, noch die Reibungsfläche mit einem abriebfesten Material beschichten, da diese im allgemeinen keine hohe Elastizität aufweisen.

Um diesen Nachteil der anliegenden elastischen Dichtung zu umgehen, offenbaren die Offenlegungsschriften DE-A-44 15 219 und DE-A-44 15 221 eine Dichtungsvorrichtung, welche eine elastische, aufblasbare Dichtung umfaßt, die bei eingeführter Lanze durch Druckbeaufschlagung eng an der Lanze anliegend ist, die jedoch beim Ein- und Ausführen der Lanze soweit zurückgezogen ist, daß sie nicht mehr an der Lanze anliegt. Um während dem Ein- resp. Ausführen dennoch die Dichtheit zu gewährleisten, sind mehrere Ringdichtungen, z.B. Weichdichtungen oder Packungen, vorgesehen, welche ständig an der Lanze anliegen. Während bei dieser Abdichtvorrichtung der Nachteil des schnellen Abriebs des elastischen Materials entfällt, stellt sich jedoch ein neues Problem. Da beim Verschieben der Lanze die aufblasbare, elastische Dichtung nicht mehr an der Lanze anliegt, kann in dieser Phase ein radiales Spiel, das durch Veränderungen des Lanzenquerschnittes entsteht, nicht mehr kompensiert werden.

Es sind weiterhin verschiedene Abdichtvorrichtungen beschrieben worden, mit denen Wellen oder Drehzapfen in einem Gehäuse abgedichtet werden können. Die FR-A-1.600.190 beschreibt z.B. eine Dichtungsvorrichtung für einen Drehzapfen, mit aufblasbaren Dichtung, die sich bei Druckbeaufschlagung dichtend an den Drehzapfen anlegt. Die aufblasbare Dichtung ist in einem Ring in einer radialen Kammer in einem Gehäuse angeordnet, wobei der Ring in dem Gehäuse derart radial beweglich ist, daß radiale Versetzungen zwischen dem Drehzapfen und dem Gehäuse ausgeglichen werden können. Diese Vorrichtung weist jedoch wiederum den Nachteil der schnell abnutzenden Schlauchdichtung auf, der oben schon beschrieben wurde.

Die DE-A-14 25 523 offenbart eine Abdichtvorrichtung für rotierende Wellen, bei der zwei weiche Packungen innerhalb eines Gehäuses um die Welle angeordnet sind, wobei die Packungen durch eine unter Federspannung stehende offene Käfigkonstruktion oder durch einen Mantel aus einem leicht verformbaren Material in ihrer axialen Lage gehalten werden. Durch Beaufschlagung des Gehäuses mit einem Druckmittel werden die weichen Packungen in radialer Richtung gegen die Dichtfläche der Welle gedrückt und der Anpreßdruck auf die Welle erhöht. Die US-A-2,273,129 behandelt ein Abdichtung für ein Wälzlager, bei der in einem mit einer Welle koaxialen Gehäuse zwei Dichtungsringe mit U-förmigen Querschnitt an der Welle anliegend angeordnet sind, wobei die Schenkel des U-Profils jeweils eine Dichtlippe ausbildet. Die Dichtungen sind axial beabstandet derart angeordnet, daß sich die Einschnitte in den U-förmigen Querschnitten axial gegenüberliegen, so daß die Einschnitte in einen zwischen den Dichtungen ausgebildeten Druckraum münden. Durch Beaufschlagung des Druckraums mit einem Druckmittel werden die beiden Dichtlippen jeder Dichtung radial auseinandergedrückt, so daß die an der Welle anliegende Dichtlippe sich enger an diese anschmiegt. Die US-A-3,434,728 beschreibt eine Vorrichtung zum Abdichten einer Wellendurchführung in einen Druckraum, mit einem einstückig mit dem Druckraum verbundenen Gehäuse, das sich ausserhalb des Druckraums koaxial zu der Welle erstreckt. Im inneren des Gehäuses sind an jeder Stirnfläche des Gehäuses Packungen um die Welle angeordnet, die jeweils durch durch einen hülsenförmigen Kolben gegen die entsprechende Stirnfläche des Gehäuses gedrückt werden. Diese Vorrichtungen sind jedoch nicht geeignet, um radiale Versetzungen zwischen einer Lanze und der Achse einer Durchführung zu kompensieren.

Der vorliegenden Erfindung liegt folglich die Aufgabe zugrunde, eine Abdichtungsvorrichtung zum Abdichten einer Lanze bei der Durchführung in einen unter Druck stehenden Behälter bereitzustellen, welche sowohl ein radiales Spiel infolge von Veränderungen des Lanzenquerschnittes als auch Versetzungen der Lanzenachse bezüglich der Achse der Durchführung kompensieren kann, ohne durch allzu schnelle Abnutzung die Dichtheit der Vorrichtung zu gefährden.

Diese Aufgabe wird erfindungsgemäß gelöst durch eine Vorrichtung zum Abdichten einer Lanze in einer Offnung zum Durchführen der Lanze in einen unter Druck stehenden Behälter, insbesondere einen Schachtofen, die ein äußeres Gehäuse mit einer schachtofenseitigen und einer umgebungsseitigen Stirnwand, die axial mit einer Durchgangsöffnung für eine Lanze versehen sind, und ein in dem äußeren Gehäuse angeordnetes Abdichtorgan umfaßt, und die dadurch gekennzeichnet ist, daß das Abdichtorgan ein inneres Gehäuse mit axialen, mit einer Durchgangsöffnung für die Lanze versehenen Stirnwänden umfaßt, sowie mindestens eine Packung und mindestens einen axial verschiebbaren ringförmigen Kolben, die innerhalb des inneren Gehäuses koaxial zu einer Achse des inneren Gehäuses angeordnet sind, daß die Packung in Betätigungsrichtung des Kolbens zwischen dem Kolben und einer der Stirnwände des inneren Gehäuses angeordnet ist, daß die Packung durch Betätigung des Kolbens axial gegen eine der Stirnwände des inneren Gehäuses zusammenpreßbar ist, wobei die Packung sich radial ausdehnt und dichtend um eine durchgeführte Lanze Lanze legt, und daß das innere Gehäuse in dem äußeren Gehäuse radial verschiebbar angebracht ist, so daß das innere Gehäuse mitsamt der Packung und dem Kolben selbstzentrierend auf einer durchgeführten Lanze ist .

Durch die Verwendung einer Packung als dichtendes Element, also einer plastischen Dichtung, können die negativen Auswirkungen des Verschleißes der Dichtungsanordnung entscheidend gesenkt werden. In der Tat hat man bei plastischen Dichtungen nicht das Problem, daß ihre Elastizität bewahrt werden muß. Man kann also bei dieser Packung die Materialstärke erhöhen und die Reibungsfläche mit einem abriebfesten Material beschichten, ohne daß es zu einer Beeinträchtigung der Dichtungseigenschaften kommt.

Es ist anzumerken, daß der Begriff Packung hier als Oberbegriff gebraucht ist. Für den Fachmann versteht es sich von selbst, daß eine Packung, wie sie in der vorliegenden Erfindung verwendet wird, auch aus mehreren axial nebeneinander angeordneten Packungsringen bestehen kann. In diesem Fall werden die einzelnen Packungsringe bei Betätigung des Kolbens gegeneinander gepreßt, wobei sich ein erster Packungsringe gegen eine der Stirnwände abstützt, während ein zweiter Packungsring an dem Kolben direkt anliegt und den Kolbendruck auf die dazwischenliegenden Packungsringe überträgt.

Da die Packung durch einen Kolben zusammenpreßbar ist, besitzt die erfindungsgemäße Vorrichtung die Eigenschaft, daß die Dichtung an Variationen des Lanzenquerschnittes angepaßt werden kann. Darüber hinaus kann zum Verschieben der Lanze in der Vorrichtung die Betätigung des Kolbens abgestellt werden. Hierdurch lockert sich der enge Sitz der Packung um die Lanze, und diese läßt sich mit weniger Reibungswiderstand verschieben.

Weiterhin kann, je nach Innendruck in dem Behälter, die Dichtheit der gesamten Vorrichtung durch entsprechende stärkere oder schwächere Betätigung des Kolbens den Gegebenheiten in dem Behälter angepaßt werden. Mit anderen Worten, man kann z.B. bei einer Druckerhöhung in dem Behälter die benötigte höhere Dichtheit der Dichtungsvorrichtung durch stärkere Betätigung des Kolbens erreichen.

Die radiale Verschiebungsmöglichkeit des inneren Gehäuses in dem zweiten Gehäuse ermöglicht es dem inneren Gehäuse, sich an eine schräge oder eine axial versetzte Position der Lanze in der Abdichtungsvorrichtung anzupassen. Das innere Gehäuse kann sich also auf der Lanze frei zentrieren, wenn die Lanze schräg oder axial versetzt in die Abdichtungsvorrichtung eingeführt wird.

In einer bevorzugten Ausführung umfaßt das Abdichtorgan zwei Kolben und zwei Packungen, die koaxial zu der Achse der Vorrichtung angeordnet sind, wobei die beiden Kolben axial zwischen den zwei Packungen angeordnet sind, so daß sie bei Betätigung in entgegengesetzte Richtungen wirken, und jede der Packungen durch einen Kolben gegen eine der Stirnwände des inneren Gehäuses zusammenpreßbar ist.

Durch die Verwendung mehrerer Packungen läßt sich die Beanspruchung der einzelnen Packung herabsetzen. Außerdem wird bei geringerer Betätigungsintensität der Kolben schon eine ausreichende Dichtwirkung der Vorrichtung erreicht.

Um das Ein- resp. Ausführen der Lanze zu erleichtern und um den Verschleiß der Dichtungen zu verringern ist es vorteilhaft, ein elastisches Element innerhalb der mindestens einen Packung konzentrisch zu der Achse der Vorrichtung anzubringen, das von der Packung umschlossen wird und das bei nicht betätigtem Kolben, die axiale Verformung der Packung zumindest teilweise rückgängig macht.

Das elastische Element ist bei nachlassendem Kolbendruck auf die Packung bestrebt, seine ursprüngliche Form wieder einzunehmen. Wenn der Kolben nicht mehr betätigt wird, wird die beim Zusammenpressen der Packung durch die Kolben in dem elastischen Element gespeicherte potentielle Energie freigesetzt, und die Packung wird axial gedehnt. Dies ist mit einer radialen Kontraktion verbunden, wodurch der enge Sitz der Packung um die Lanze gelockert wird.

Um die Dichtheit der gesamten Vorrichtung zu gewährleisten, ist das innere Gehäuse in vorteilhafter Weise mit ringförmigen Weichdichtungen, die an den Stirnwänden des inneren Gehäuses angebracht sind, gegen die Stirnflächen des äußeren Gehäuses abgedichtet.

Besonders vorteilhaft ist eine Ausführung, in der zwei Kolben derart angeordnet sind, daß zwischen den zwei Kolben eine ringförmige Druckkammer ausgebildet ist. Ist weiterhin jeder der Kolben mit einer inneren Ringdichtung radial nach innen gegen eine Führungshülse, die koaxial zu der Achse angebracht ist, abgedichtet und mit einer äußeren Ringdichtung radial nach außen gegen die Innenfläche des inneren Gehäuses abgedichtet, so ist die ringförmige Druckkammer axial abgedichtet, und die beiden Kolben können gleichzeitig durch Druckbeaufschlagung der Druckkammer mit einem Medium betätigt werden.

Dies erspart getrennte Zuführungsleitungen für das Druckmedium zu den beiden Kolben, sowie eine aufwendige Regelung der Druckbeaufschlagung.

In einer weiteren Ausführung ist eine elastische Dichtung in der Druckkammer angeordnet, welche die Druckkammer nach außen hin abdichtet

In dieser Ausführung kann auf die Ringdichtungen, mit denen jeder der Kolben radial nach innen gegen die Führungshülse und radial nach außen gegen die Innenfläche des ersten Gehäuses abgedichtet ist, verzichtet werden.

Um eine gewisse dauerhafte Vorspannung der Packungen, und damit eine gewisse Dichtheit zu gewährleisten, können optional in der Druckkammer elastische Mittel zwischen den Kolben angeordnet sein, durch die die Kolben betätigbar sind. Diese elastischen Mittel können z.B. eine Spiralfeder umfassen. Durch diese Feder werden die Kolben auch dann mit einer gewissen Kraft gegen die Packungen gedrückt, wenn die Druckkammer nicht unter Druck steht. Es ist anzumerken, daß die Federkraft der Feder kleiner sein sollte, als die Federkraft der elastischen Mittel in den Packungen, da diese ansonsten die Verformung der Packung nicht (auch nicht teilweise) rückgängig machen können.

In einer weiteren Variante der Ausführung sind zwischen die Kolben radial verschiebbare, keilförmige Elemente angebracht, durch die die Kolben betätigbar sind. Diese keilförmigen Elemente können dann zum Beispiel durch Druckbeaufschlagung einer Kammer, zwischen dem ersten und dem zweiten Gehäuse, mit einem Medium radial nach innen verschiebbar sein.

Optional kann auch ein elastisches Mittel, z.B. ein vorgespannter Spiralfederring oder ein vorgespannter Ring aus elastischem Kunststoff, um die keilförmigen Elemente herum angeordnet sein, das auf die keilförmigen Elemente eine radial nach innen gerichtete Kraft ausübt.

Als Rückstellelement für die keilförmigen Elemente können elastische Mittel zwischen der Führungshülse und den keilförmigen Elementen angeordnet sein, die sich radial nach innen an der Führungshülse abstützen und die radial nach außen gegen die keilförmigen Elemente drücken.

Vorteilhaft ist es für alle Ausführungsvarianten, die Auflageflächen, mit denen das innere Gehäuse auf der Lanze aufliegt, mit einem Material zu beschichten, das den Reibungswiderstand der Auflageflächen auf der Lanze herabsetzt.

Dadurch verringert sich natürlich der Verschleiß dieser Teile, was in Gegenzug die Lebensdauer der Abdichtvorrichtung beträchtlich erhöht.

Im folgenden werden verschiedene Ausführungsarten der erfindungsgemäßen Vorrichtung anhand der Figuren beschrieben. Es zeigen:
- Fig.1 :: einen Schnitt durch die Achse einer ersten Ausführungsart einer Vorrichtung zum Abdichten einer Lanze,
- Fig.2 :: das zentrale Teilstück der Abdichtvorrichtung nach Fig.1 in einem vergrößerten Ausschnitt
- Fig.3-Fig.7 :: Schnitte durch die zentralen Teilstücke von verschiedenen Abdichtvorrichtungen
- Fig.8 :: einen Querschnitt entlang der Linie A-A' senkrecht zur Achse durch die Abdichtvorrichtung der Fig.1.

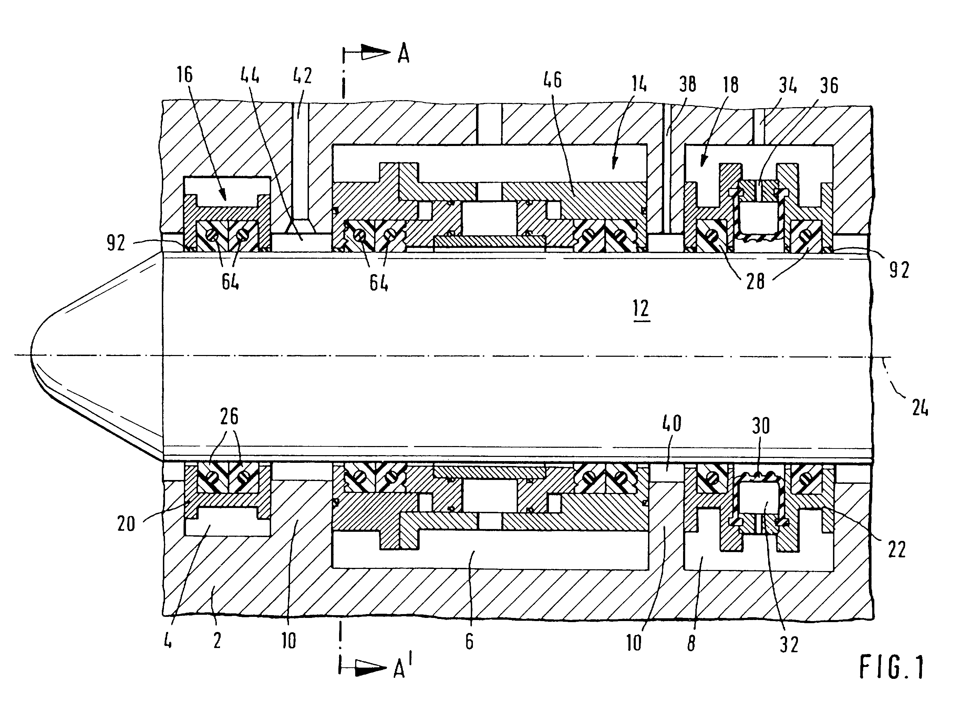

Fig.1 zeigt einen Schnitt durch eine Ausführung einer Abdichtungsvorrichtung. Sie umfaßt ein äußeres Gehäuse 2, das im Inneren in mehrere Kammern 4-8 eingeteilt ist, die in axialer Richtung durch Rippen 10 getrennt sind und in welche die einzelnen Dichtelemente angeordnet sind. Axial in der Mitte ist das Gehäuse 2 und die Rippen 10 mit einer Durchführungsöffnung für eine Lanze 12 versehen, wobei die Weite der Öffnung so dimensioniert ist, daß die Lanze 12 in ihr ein relativ großes radiales Spiel aufweist.

Die Vorrichtung in Fig.1 umfaßt neben einem zentralen Abdichtorgan 14, das in der mittleren Kammer 6 angebracht ist, zwei weitere Dichtelemente 16, 18 in den Kammern 4 und 8. Diese können z.B. von der Art sein, wie sie in DE-A-44 15 219 und DE-A-44 15 221 beschrieben sind. Sie umfassen Ringe 20, 22, deren lichter Querschnitt an den Querschnitt der Lanze 12 angepaßt ist. Jeder dieser Ringe 20 resp. 22 ist in seiner Kammern 4 resp. 8 so angebracht, daß er senkrecht zu der zentralen Achse 24 der Abdichtungsvorrichtung verschiebbar ist. Diese Verschiebungsmöglichkeit der Ringe 20, 22 in ihrer jeweiligen Kammer 4, 8 des Gehäuses 2 ermöglicht den Ringen 20, 22, sich an eine schräge oder axial versetzte Position der Lanze 12 in der Abdichtungsvorrichtung anzupassen. Die Ringe mit den Dichtelementen können sich also auf der Lanze 12 frei zentrieren, wenn die Lanze durch die Abdichtungsvorrichtung schräg oder axial versetzt eingeführt wird.

Die Ringe 20, 22 stellen Halterungen für Dichtungspackungen oder Dichtungen dar, die auf der Lanze 12 aufliegen. So ist z.B. der Ring 20 im Inneren mit einer aus zwei Packungsringen 26 bestehenden Packung versehen, über die er auf der Lanze 12 aufliegt. Der Ring 22 weist eine aufblasbare Dichtung 30 auf, die in einem Hohlraum 32 des Rings 22 untergebracht ist. In der nicht aufgeblasenen Position ist diese aufblasbare Dichtung 30 in ihren Hohlraum 32 zurückgezogen; dies ermöglicht, die Lanze 12 zu verschieben, ohne daß die aufblasbare Dichtung 30 beschädigt bzw. abgenutzt wird. In der aufgeblasenen Position kann die aufblasbare Dichtung 30 jedoch ein wesentlich größeres radiales Spiel kompensieren als die zwei Packungsringe 26 des Dichtungselementes 16. Der Ring 22 liegt in vorteilhafter Weise über zwei Packungen 28, die beiderseits des Hohlraums 32 angeordnet sind, auf der Lanze 12 auf. Um Druck auf die aufblasbare Dichtung 30 zu geben, wird in vorteilhafter Weise Druck auf die Kammer 8 gegeben. Dies geschieht z.B. dadurch, daß diese über eine Versorgungsöffnung 34 mit dem Druckmedium versorgt wird. Über Öffnungen 36 in dem Ring 22 steht die Kammer 8 mit dem Hohlraum 30 in Verbindung, wodurch das Druckmedium in die aufblasbare Dichtung 30 gelangt. Schließlich ist noch anzumerken, daß die aufblasbare Dichtung 30 durch eine unter Druck stehende Flüssigkeit oder ein unter Druck stehendes Gas aufgeblasen werden kann.

In Einführungsrichtung der Lanze 12 gesehen ist hinter der Kammer 8 eine Einlaßöffnung 38 für Schmiermittel in die Rippe 10 des Gehäuses 2 eingebracht. Hierdurch gelangt Schmiermittel in den ringförmigen Hohlraum 40, der axial umgebungsseitig von dem Ring 22 und schachtofenseitig von dem zentralen Abdichtorgan 14 begrenzt wird und der radial innen von der Lanze 12 und außen von der Rippe 10 umschlossen ist. Das Schmiermittel dient dabei sowohl zum Schmieren der Packungen, wodurch deren Abnutzung beim Verschieben der Lanze herabgesetzt wird, als auch dazu, die Lanze mit einem vor Korrosion schützenden Film zu überziehen.

In Einführungsrichtung ist vor dem Dichtelement 16 eine Einlaßöffnung 42 für Sperrgas vorgesehen. Durch diese Öffnung 42 kann Sperrluft mit hohem Druck in den ringförmigen Hohlraum 44 eingeblasen werden. Wenn der Druck in dem Hohlraum 44 größer ist als der Druck im Schachtofen, wird verhindert, daß bei einer eventuellen Undichtheit des Dichtelementes 16 gesundheitsschädliche Gase wie z.B. Kohlenmonoxid aus dem Schachtofen austreten.

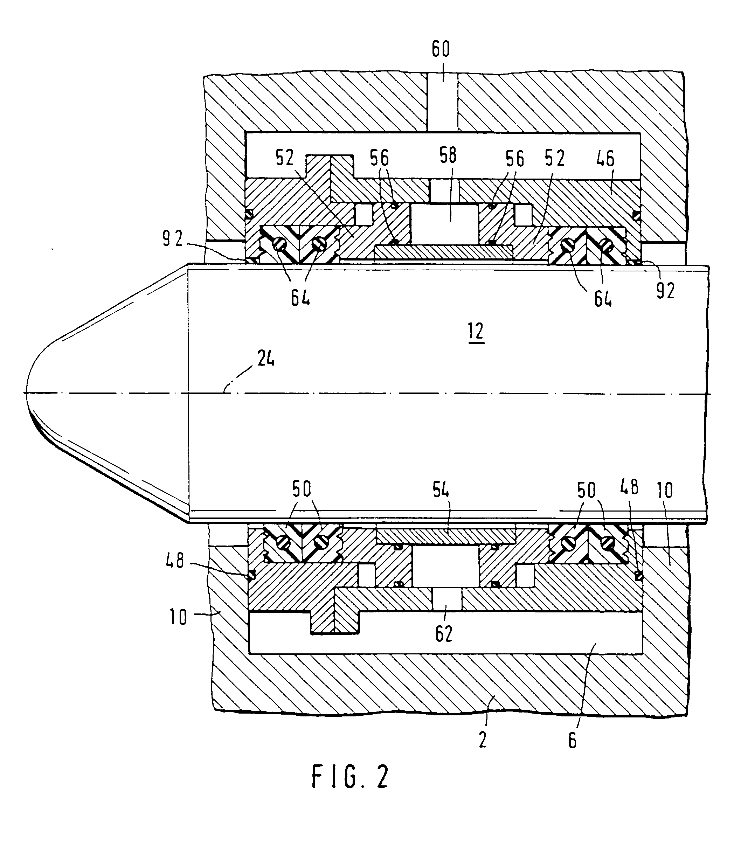

Das zentrale Abdichtorgan 14 ist in Fig.2 vergrößert dargestellt. Es umfaßt ein inneres Gehäuse 46 mit einer schachtofenseitigen und einer umgebungsseitigen Stirnwand, die mit einer Durchführungsöffnung für eine Lanze 12 versehen sind. Dieses innere Gehäuse ist in der mittleren Kammer 6 des äußeren Gehäuses 2 derart angebracht, daß es senkrecht zu der zentralen Achse 24 der Abdichtungsvorrichtung verschiebbar ist. Diese Verschiebungsmöglichkeit des innerer Gehäuses 46 in der Kammer 6 des Gehäuses 2 ermöglicht, wie bei den Ringen 20, 22, eine freie Zentrierung des inneren Gehäuses 46 auf der Lanze 12, wenn die Lanze durch die Abdichtungsvorrichtung schräg oder axial versetzt eingeführt wird.

An seinen beiden Stirnwänden ist das innere Gehäuse 46 mit Ringdichtungen 48, die in einer koaxial zu der Achse 24 in die Stirnseiten eingedrehten Nut sitzen, axial gegen die Rippen 10 des äußeren Gehäuses 2 abgedichtet. Innerhalb des Gehäuses 46 sind koaxial zu der Achse 24 sowohl schachtofenseitig wie auch umgebungsseitig je eine aus zwei Packungsringen bestehende Packung 50 angeordnet. Diese Packungen 50 liegen bevorzugt an der jeweiligen Stirnwand des inneren Gehäuses 46 an. Sie sind derart dimensioniert, daß sie sich an die Lanze 12 anlegen, wenn diese in die Abdichtvorrichtung eingeschoben wird. Um bei eingeführter Lanze 12 die Dichtheit weiter zu erhöhen, sind weiterhin zwei Ringkolben 52 in dem Gehäuse 46 vorgesehen. Diese Ringkolben 52 werden radial nach außen hin an der Innenwand des inneren Gehäuses 46 geführt, während sie nach Innen von einer Führungshülse 54 geführt werden, die koaxial zu der Achse 24 angeordnet ist, und deren lichte Weite derart bemessen ist, daß die Lanze in der Hülse 54 ein gewisses radiales Spiel aufweist. Die Ringkolben sind jeweils durch zwei Ringdichtungen 56, z.B. O-Ringe oder Quad-Ringe, radial gegen das innere Gehäuse 46 und die Führungshülse 54 abgedichtet, wodurch zwischen den Kolben in axialer Richtung eine abgedichtete Druckkammer 58 gebildet wird.

Um die Kolben 52 gleichzeitig zu betätigen, wird die Druckkammer 58 mit Druck beaufschlagt. Dies geschieht bevorzugt dadurch, daß die durch die Ringdichtungen 48 abgedichtete Kammer 6 über eine Versorgungsöffnung 60 mit einem Druckmedium versorgt wird. Die Kammer 6 steht über Öffnungen 62 in dem Gehäuse 46 mit der Druckkammer 58 in Verbindung, wodurch das Druckmedium in die Druckkammer 58 gelangt. Hierbei ist anzumerken, daß die Druckbeaufschlagung der Druckkammer 58 durch eine unter Druck stehende Flüssigkeit oder ein unter Druck stehendes Gas ausgefürht werden kann.

Die Ringkolben 52 sind axial verschiebbar angeordnet, so daß bei Betätigung einer der Kolben gegen die an der schachtofenseitigen Stirnwand anliegende Packung drückt, während der andere Kolben gegen die an der umgebungsseitigen Stirnwand anliegende Packung drückt. Durch den hierdurch ausgeübten axialen Druck werden die Packungen 50 gegen die jeweilige Stirnwand des inneren Gehäuses 46 gedrückt und axial zusammengepreßt, wobei sie sich radial ausdehnen. Dies bewirkt, daß sich die Packungen enger an die Lanze 12 anlegen, wodurch die Dichtheit der gesamten Vorrichtung erhöht wird.

Zum Herausziehen der Lanze 12 aus der Vorrichtung, wird zunächst der Überdruck in der Kammer 6 und der Druckkammer 58 abgebaut. Dadurch wird der durch die Kolben 52 auf die Packungen 50 ausgeübte Druck abgestellt, und die Packungen 50 können sich axial wieder ausdehnen, wodurch die radiale Ausdehnung teilweise rückgängig gemacht wird. Damit die Packungen 50 ihre ursprüngliche Form wiedereinnehmen, ist jede Packung in ihrem Inneren mit einem elastischen Element 64 versehen, das konzentrisch zu der Achse 24 der Vorrichtung angebracht ist und von der Packung auf seinem gesamten Umfang umschlossen wird. Dieses elastische Element 64, z.B. ein Kern aus Kautschuk, bewirkt, daß bei nicht betätigtem Kolben die axiale Verformung der Packung zumindest teilweise rückgängig gemacht wird. Die Packung 50 liegt dadurch weniger eng an der Lanze 12 an, wodurch der Reibungswiderstand, und damit auch der Abrieb, erheblich herabgesetzt wird. Durch die geringere Abnutzung erhöht sich wiederum die Lebensdauer der Packungen 50 und diese müssen weniger häufig ersetzt werden.

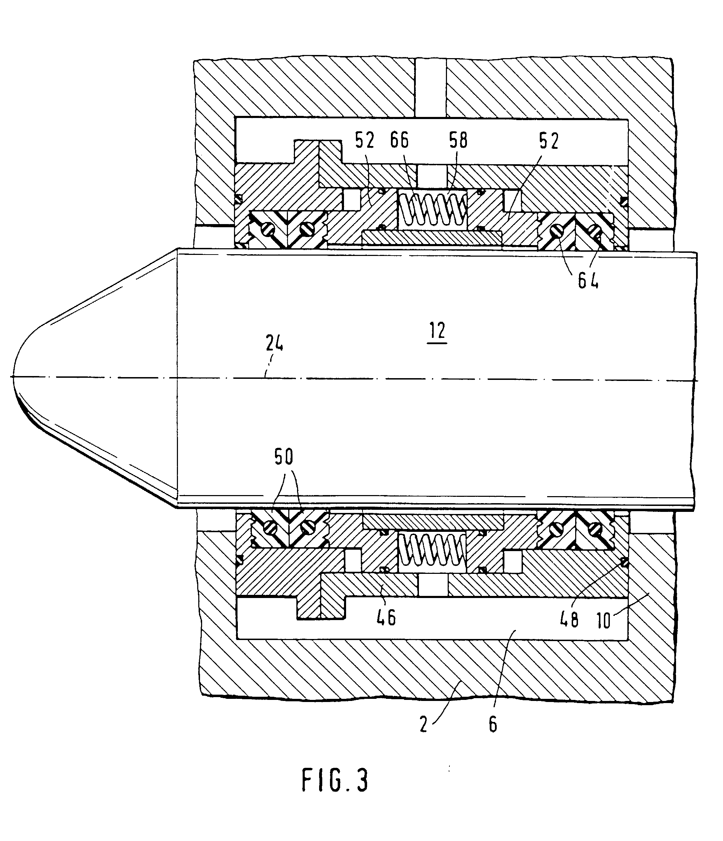

Um eine gewisse dauerhafte Vorspannung der Packungen, und damit eine gewisse Dichtheit zu gewährleisten, kann optional in der Druckkammer 58 zwischen die beiden Kolben 52 ein elastisches Mittel 66, z.B. eine Spiralfeder, angeordnet sein. Dies ist in Fig.3 dargestellt. Durch diese Feder 66 werden die Kolben auch dann mit einer gewissen Kraft gegen die Packungen gedrückt, wenn die Druckkammer 58 nicht unter Druck steht. Es ist anzumerken, daß die Federkraft der Feder 66 kleiner sein sollte, als die Federkraft der elastischen Mittel 46 in den Packungen 50, da diese ansonsten die Verformung der Packung nicht (auch nicht teilweise) rückgängig machen können.

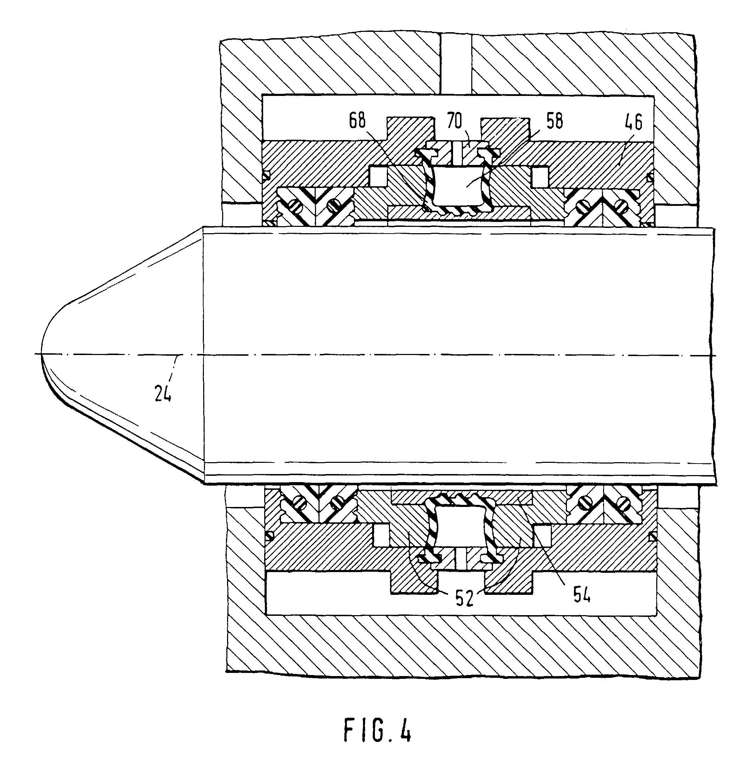

In Fig.4 ist eine weitere Variante des Abdichtorganes 14 dargestellt. In dieser Ausführung werden zum Abdichten der Druckkammer 58 keine Ringdichtungen 56 verwendet. Statt dessen ist die gesamte Druckkammer 58 mit einer elastischen Dichtung 68 ausgeschlagen, die mit einem Einsatz 70 in dem inneren Gehäuse 46 festgeklemmt ist. Diese Dichtung 68 wird ebenso wie in den vorhergehenden Ausführungsbeispielen mit Druck beaufschlagt. Da sich die Dichtung 68 radial zur Achse 24 hin gegen die Führungshülse 54 abstützt, dehnt sie sich in axialer Richtung aus, wodurch die beiden Kolben 52 wiederum gleichzeitig betätigt werden.

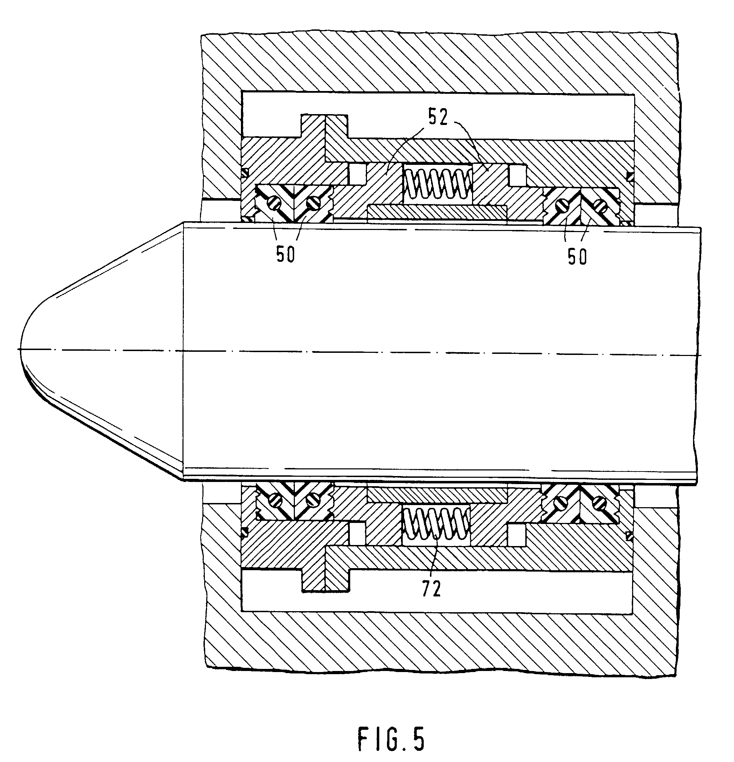

Fig.5 zeigt eine weitere mögliche Ausführungsart, des Abdichtorganes 14. In dieser Variante werden die beiden Kolben 52 einzig durch ein elastisches Mittel 72 betätigt. Dieses umfaßt vorteilhaft eine Spiralfeder, und ist derart vorgespannt, daß die von ihr ausgeübte Federkraft ausreicht, um über die Kolben 52 die Packungen 50 axial zusammenzupressen. Das Abdichtorgan stellt sich dadurch selbsttätig an Schwankungen im Lanzenquerschnitt ein.

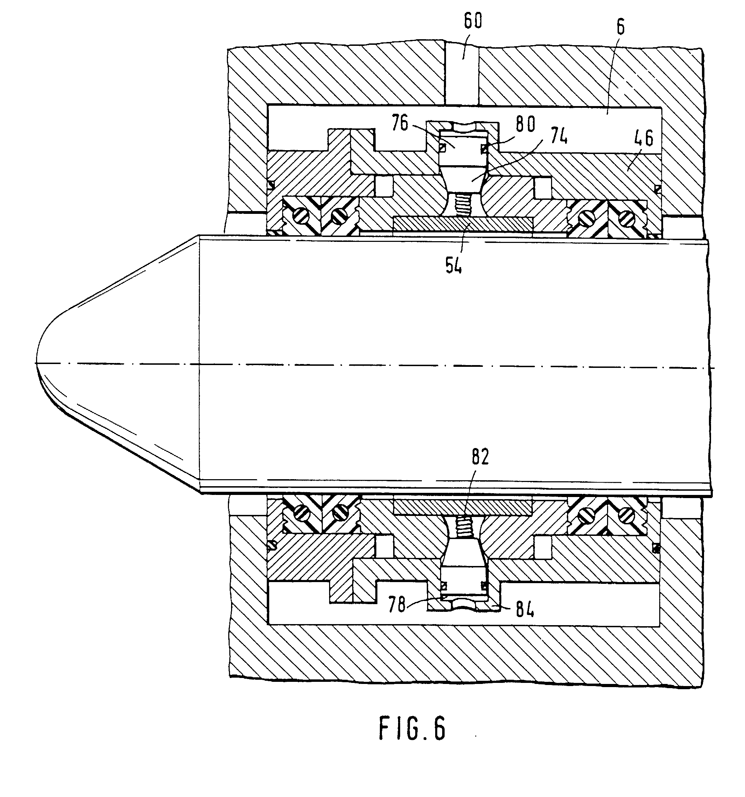

Eine weitere extern regelbare Variante ist in Fig.6 vorgestellt. Dabei werden die beiden Kolben 52 mittels keilförmiger Elemente 74 betätigt, welche zwischen die beiden Kolben 52 derart angebracht sind, daß sie durch radiale Verschiebung zur Achse hin die beiden Kolben 52 axial auseinanderdrücken. Radial nach außen hin weisen die Betätigungselemente 74 ein Teilstück 76 mit zueinander parallelen Seitenflächen auf. An diesen Seitenflächen sind die Elemente 74 in einer Führungsöffnung 78 in dem inneren Gehäuse 46 geführt und mittels Weichdichtungen 80 gegen diese abgedichtet.

Betätigt werden die keilförmigen Elemente 74 durch Druckbeaufschlagung der Kammer 6 über die Einlaßöffnung 60. Der sich in der Kammer aufbauende Überdruck wirkt auf die äußere Seitenfläche der keilförmigen Elemente 74 und übt auf diese eine radial nach innen gerichtete Kraft aus. Beim Ablassen des Überdrucks aus der Kammer 6 werden die Elemente 74 von elastischen Mittel 82 wieder radial nach außen geschoben. Diese elastischen Mittel 82 umfassen vorteilhaft eine Spiralfeder, die sich radial nach innen an der Führungshülse 54 abstützt, und die radial nach außen gegen die Innenfläche des Betätigungselementes 74 drückt. Damit bei druckloser Kammer 6 die Betätigungselemente 74 durch die Feder 82 nicht radial nach außen aus den Führungsöffnungen 78 herausgeschoben werden, sind außen an den Führungsöffnungen 78 Anschläge 84 vorgesehen.

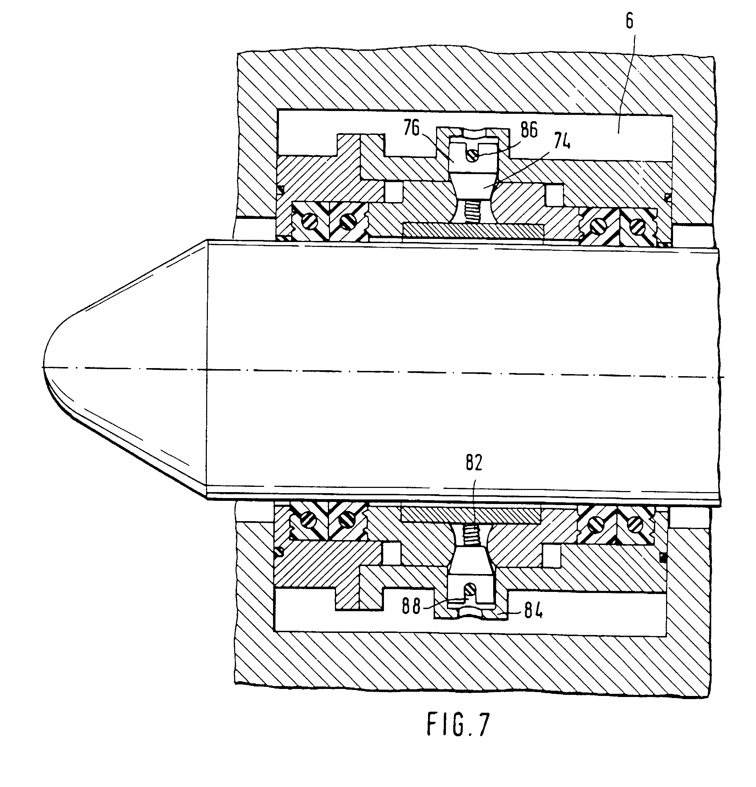

Basierend auf der Ausführungsart der Fig.6 kann eine weitere Variante realisiert werden, die sich selbsttätig an Querschnittsveränderungen anpaßt. Diese ist in Fig.7 dargestellt. Die Betätigung der keilförmigen Elemente 74 geschieht hier nicht mehr durch Druckbeaufschlagung der Kammer 6, sondern durch ein elastischen Element 86, das außen um die keilförmigen Betätigungselemente 74 gelegt ist. Dieses elastische Element 86 kann z.B. ein Spiralfederring oder ein Ring aus einem elastischen Kunststoff sein, der vorgespannt in einer ringförmigen Nut 88 angebracht ist, die koaxial zur Achse in die Teilstücke 76 der Betätigungselemente 74 von der äußeren Seitenfläche radial nach innen ausgeführt ist. Es ist anzumerken, daß in dieser Ausführungsvariante die Weichdichtungen 80 überflüssig werden, ebenso wie die Einlaßöffnung 60.

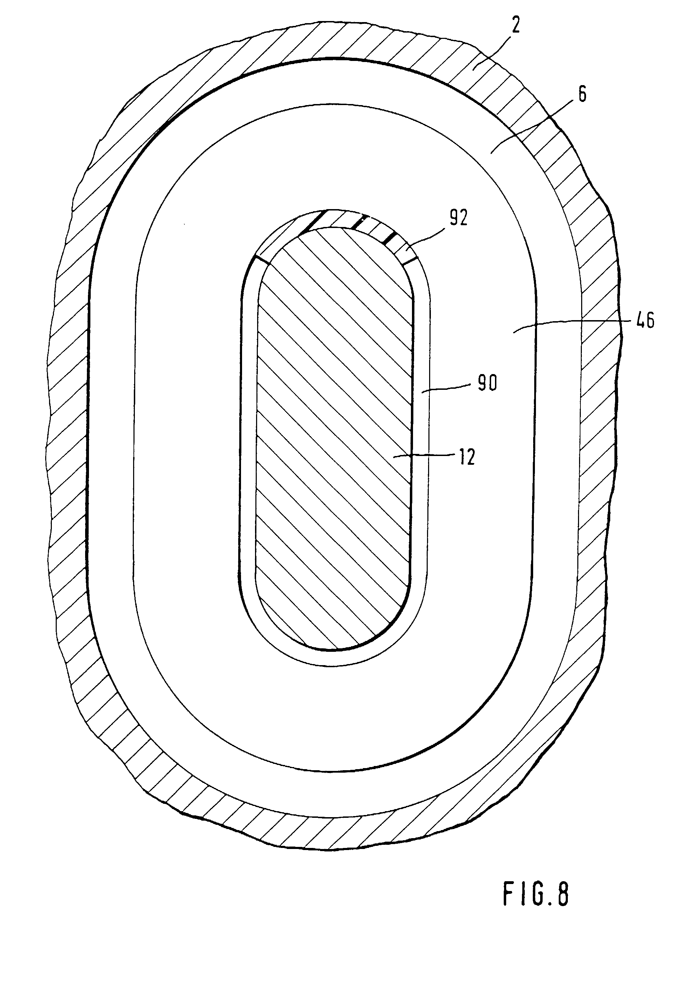

Fig.8 zeigt einen Querschnitt entlang der Linie A-A' in Fig.1 senkrecht zur Achse durch eine Abdichtvorrichtung mit eingeführter Lanze 12. Man erkennt, daß die Lanze 12 und somit die Durchführungsöffnung in diesem Fall keinen kreisförmigen Querschnitt aufweisen, sondern einen unrunden Querschnitt. Dies ist jedoch nur eine mögliche Ausführungsart, selbstverständlich kann der Lanzenquerschnitt auch kreisrund sein.

Im Zentrum der Anordnung erkennt man die Lanze 12, die in die Durchführungsöffnung 90 in dem inneren Gehäuse 46 derart eingeführt ist, daß zwischen der Lanze 12 und dem inneren Gehäuse 46 ein gewisses Spiel vorhanden ist. Im äußeren Bereich der Anordnung von Fig.8 erkennt man weiterhin die Kammer 6, die nach innen durch das innere Gehäuse 46 und nach außen durch das äußere Gehäuse 2 begrenzt wird.

Die Innenfläche der Durchführungsöffnung 90 ist in Ihrem oberen Bereich mit einem Material 92 beschichtet, das besonders gute Gleiteigenschaften aufweist. Dieses Material 92, mit dem im übrigen auch die oberen Teilbereiche der Innenflächen der Ringe 20, 22 beschichtet sind, vermindert die Reibung der Ringe 20, 22 resp. des Abdichtorganes 14 an der Lanze, und verhindert somit die rasche Abnutzung der Bereiche, die beim Zentrieren der Ringe 20, 22 resp. des Abdichtorganes 14 auf der Lanze 12 auf dieser aufliegen und auf dieser hin- und hergleiten.

## Patentansprüche

1. Vorrichtung zum Abdichten einer Lanze (12) in einer Öffnung zum Durchführen der Lanze (12) in einen unter Druck stehenden Behälter, insbesondere einen Schachtofen, die ein äußeres Gehäuse (2) mit einer schachtofenseitigen und einer umgebungsseitigen Stirnwand, die axial mit einer Durchgangsöffnung für eine Lanze (12) versehen sind, und ein in dem äußere Gehäuse (2) angeordnetes Abdichtorgan (14) umfaßt, dadurch **gekennzeichnet, daß**
das Abdichtorgan (14) ein inneres Gehäuse (46) mit axialen, mit einer Durchgangsöffnung für die Lanze versehenen Stirnwänden umfaßt, sowie mindestens eine Packung (50) und mindestens einen axial verschiebbaren ringförmigen Kolben (52), die innerhalb des inneren Gehäuses (46) koaxial zu einer Achse (24) des inneren Gehäuses (46) angeordnet sind,
daß die Packung (50) in Betätigungsrichtung des Kolbens (52) zwischen dem Kolben (52) und einer der Stirnwände des inneren Gehäuses (46) angeordnet ist
daß die Packung (50) durch Betätigung des Kolbens (52) axial gegen eine der Stirnwände des inneren Gehäuses (46) zusammenpreßbar ist, wobei die Packung (50) sich radial ausdehnt und dichtend um eine durchgeführte Lanze (12) legt, und
daß das innere Gehäuse (46) in dem äußeren Gehäuse (2) radial verschiebbar angebracht ist, so daß das innere Gehäuse (46) mitsamt der Packung (50) und dem Kolben (52) selbstzentrierend auf einer durchgeführten Lanze (12) ist.

2. Vorrichtung zum Abdichten nach Anspruch 1, dadurch gekennzeichnet, daß das Abdichtorgan (14) zwei Kolben (52) und zwei Packungen (50) umfaßt, die koaxial zu der Achse (24) des inneren Gehäuses (46) angeordnet sind, daß die beiden Kolben (52) axial zwischen den zwei Packungen (50) angeordnet sind, daß sie bei Betätigung in entgegengesetzte Richtungen wirken, und daß jede der Packungen (50) durch einen Kolben (52) gegen eine der Stirnwände des inneren Gehäuses (46) zusammenpreßbar ist.

3. Vorrichtung zum Abdichten nach Anspruch 1 oder 2, dadurch gekennzeichnet, daß ein elastisches Element (64) innerhalb der mindestens einen Pakkung (50) konzentrisch zu der Achse (24) der Vorrichtung angebracht ist, das von der Packung (50) umschlossen wird und das bei nicht betätigtem Kolben (52), die axiale Verformung der Packung (50) zumindest teilweise rückgängig macht.

4. Vorrichtung zum Abdichten nach einem der Ansprüche 1 bis 3, dadurch gekennzeichnet, daß ringförmige Weichdichtungen (48) an den Stirnwänden des inneren Gehäuses (46) angebracht sind, die das innere Gehäuse (46) gegen die Stirnwände des äußeren Gehäuses (2) abdichten.

5. Vorrichtung zum Abdichten nach einem der Ansprüche 2 bis 4, dadurch gekennzeichnet, daß eine ringförmige Druckkammer (58) zwischen den zwei Kolben (52) angeordnet ist.

6. Vorrichtung zum Abdichten nach einem der Ansprüche 2 bis 5, dadurch gekennzeichnet, daß jeder der Kolben (52) mit einer inneren Ringdichtung (56) radial nach innen gegen eine koaxial zu der Achse (24) angebrachte Führungshülse (54) abgedichtet ist und mit einer äußeren Ringdichtung (56) radial nach außen gegen die Innenfläche des inneren Gehäuses (46) abgedichtet ist.

7. Vorrichtung zum Abdichten nach Anspruch 5, dadurch gekennzeichnet, daß eine elastische Dichtung (68) in der Druckkammer (58) angeordnet ist, welche die Druckkammer (58) nach außen hin abdichtet.

8. Vorrichtung zum Abdichten nach einem der Ansprüche 5 bis 7, dadurch gekennzeichnet, daß die Kolben (52) durch Druckbeaufschlagung der Druckkammer (58) mit einem Medium betätigbar sind.

9. Vorrichtung zum Abdichten nach einem der Ansprüche 2 bis 7, dadurch gekennzeichnet, daß elastische Mittel (66, 72) zwischen den Kolben (52) angeordnet sind, durch die die Kolben (52) betätigbar sind.

10. Vorrichtung zum Abdichten nach einem der Ansprüche 2 bis 4, dadurch gekennzeichnet, daß zwischen den Kolben (52) radial verschiebbare, keilförmige Elemente (74) angebracht sind, durch die die Kolben (52) betätigbar sind.

11. Vorrichtung zum Abdichten nach Anspruch 10, dadurch gekennzeichnet, daß die keilförmigen Elemente (74) durch Druckbeaufschlagung einer Kammer (6), zwischen dem inneren und dem äußeren Gehäuse, mit einem Medium radial nach innen verschiebbar sind.

12. Vorrichtung zum Abdichten nach Anspruch 10, dadurch gekennzeichnet, daß ein elastisches Mittel (86) um die keilförmigen Elemente (74) herum angeordnet ist, das auf die keilförmigen Elemente (74) eine radial nach innen gerichtete Kraft ausübt.

13. Vorrichtung zum Abdichten nach Anspruch 12, dadurch gekennzeichnet, daß das elastische Mittel (86) einen vorgespannten Spiralfederring umfaßt.

14. Vorrichtung zum Abdichten nach Anspruch 12, dadurch gekennzeichnet, daß das elastische Mittel (86) einen vorgespannten Ring aus elastischem Kunstoff umfaßt.

15. Vorrichtung zum Abdichten nach einem der Ansprüche 12 bis 14, dadurch gekennzeichnet, daß zwischen der Führungshülse (54) und den keilförmigen Elementen (74) elastische Mittel (82) angeordnet sind, die sich radial nach innen an der Führungshülse (54) abstützen und die radial nach außen gegen die keilförmigen Elemente (74) drücken.

16. Vorrichtung zum Abdichten nach einem der Ansprüche 1 bis 15, dadurch gekennzeichnet, daß Auflageflächen, mit denen das innere Gehäuse (46) auf der Lanze (12) aufliegt, mit einem Material (92) beschichtet sind, das den Reibungswiderstand der Auflageflächen auf der Lanze (12) herabsetzt.

## Claims

1. Device for sealing a lance (12) to an opening for leading the lance (12) into a container under pressure, in particular a shaft furnace, which comprises an outer casing (2) with an end wall on the shaft furnace side and on the environment side, which are provided axially with an opening for a lance (12) and a sealing element (14) arranged in the outer casing (2), **characterised in that**
the sealing element (14) comprises an inner casing (46) with axial end walls provided with an opening for the lance as well as at least one packing (50) and at least one axially movable annular piston (52), which are arranged coaxially with an axis (24) of the inner casing (46) inside the latter,
the packing (50) is arranged between the piston (52) and one of the end walls of the inner casing (46) in the actuating direction of the piston (52),
the packing (50) can be compressed by actuation of the piston (52) axially against one of the end walls of the inner casing (46) whereby the packing (50) extends radially and forms a seal around a lance (12) which has been led through, and
the inner casing (46) can be moved radially in the outer casing (2), so that the inner casing (46) together with the packing (50) and the piston (52) is self-centering on a lance (12).

2. Sealing device according to claim 1, characterised in that the sealing element (14) comprises two pistons (52) and two packings (50), which are arranged coaxially with the axis (24) of the inner casing (46), in that the two pistons (52) are arranged axially between the two packings (50), in that they act in opposite directions on actuation and that each of the packings (50) can be compressed by a piston (52) against one of the end walls of the inner casing (46).

3. Sealing device according to claim 1 or 2, characterised in that an elastic element (64), which is enclosed by the packing (50) and which at least partially reverses the axial deformation of the packing (50) when the piston (52) is not actuated, is mounted inside the at least one packing (50) concentrically with the axis (24) of the device.

4. Sealing device according to one of claims 1 to 3, characterised in that annular flexible seals (48), which seal the inner casing (46) against the end walls of the outer casing (2), are provided on the end walls of the inner casing (46).

5. Sealing device according to one of claims 2 to 4, characterised in that an annular pressure chamber (58) is arranged between the two pistons (52).

6. Sealing device according to one of claims 2 to 5, characterised in that each of the pistons (52) is sealed with an inner annular seal (56) radially inwards against a guide sleeve (54) mounted coaxially with the axis (24) and is sealed radially outwards with an outer annular seal (56) against the inner face of the inner casing (46).

7. Sealing device according to claim 5, characterised in that an elastic seal (68), which seals the pressure chamber (58) from the outside, is arranged in the pressure chamber (58).

8. Sealing device according to one of claims 5 to 7, characterised in that the pistons (52) can be actuated by admission of a pressure medium to the pressure chamber (58).

9. Sealing device according to one of claims 2 to 7, characterised in that elastic means (66, 72), which can actuate the pistons (52), are arranged between the latter.

10. Sealing device according to one of claims 2 to 4, characterised in that radially movable, wedge-shaped elements (74), which can actuate the pistons (52), are arranged between the latter.

11. Sealing device according to claim 10, characterised in that the wedge-shaped elements (74) can be moved radially inwards by admission of a pressure medium to a chamber (6) between the inner and outer casing.

12. Sealing device according to claim 10, characterised in that elastic means (86), which exert a force directed radially inwards on the wedge-shaped elements (74), are arranged around the wedge-shaped elements (74).

13. Sealing device according to claim 12, characterised in that the elastic means (86) comprise a pretensioned spiral spring ring.

14. Sealing device according to claim 12, characterised in that the elastic means (86) comprises a pretensioned ring made from elastic plastic.

15. Sealing device according to one of claims 12 to 14, characterised in that elastic means (82), which are supported radially inwards on the guide sleeve (54) and are forced radially outwards against the wedge-shaped elements (74), are arranged between the guide sleeve (54) and the wedge-shaped elements (74).

16. Sealing device according to one of claims 1 to 15, characterised in that supporting surfaces with which the inner casing (46) rests on the lance (12), are coated with a material (92), which reduces the frictional resistance of the supporting surfaces on the lance (12).

## Revendications

1. Dispositif d'étanchement d'une lance (12) dans une ouverture à travers laquelle ladite lance (12) peut être introduite dans un récipient pressurisé, en particulier un four à cuve, qui comprend un boîtier externe (2) avec une paroi frontale du côté du four à cuve et une paroi frontale du côté environnant, qui sont pourvues axialement d'une ouverture de passage pour une lance (12), et un organe d'étanchement (14) disposé dans le boîtier externe (2), caractérisé en ce que
l'organe d'étanchement (14) comprend un boîtier interne (46) avec des parois frontales axiales, pourvues d'une ouverture de passage pour la lance, ainsi qu'au moins une garniture (50) et au moins un piston annulaire mobile axialement (52), qui sont disposés à l'intérieur du boîtier interne (46) coaxialement à un axe (24) du boîtier interne (46),
en ce que la garniture (50) est disposée dans le sens d'actionnement du piston (52) entre le piston (52) et l'une des parois frontales du boîtier interne (46),
en ce que la garniture (50) peut être resserrée par actionnement du piston (52) axialement contre l'une des parois frontales du boîtier interne (46), auquel cas la garniture (50) se dilate radialement et se met de façon étanche autour d'une lance introduite (12), et
en ce que le boîtier interne (46) est agencé dans le boîtier externe (2) en étant mobile radialement, de sorte que le boîtier interne (46) est avec la garniture (50) et le piston (52) à centrage automatique sur une lance introduite (12).

2. Dispositif d'étanchement selon la revendication 1, caractérisé en ce que l'organe d'étanchement (14) comprend deux pistons (52) et deux garnitures (50), qui sont disposés coaxialement à l'axe (24) du boîtier interne (46), en ce que les deux pistons (52) sont disposés axialement entre les deux garnitures (50), en ce qu'ils agissent dans des sens opposés lors de l'actionnement, et en ce que chacune des garnitures (50) peut être resserrée par un piston (52) contre l'une des parois frontales du boîtier interne (46).

3. Dispositif d'étanchement selon la revendication 1 ou 2, caractérisé en ce qu'un élément élastique (64) est mis en place à l'intérieur d'au moins une garniture (50) concentriquement à l'axe (24) du dispositif, ledit élément étant entouré de la garniture (50) et annulant au moins partiellement la déformation axiale de la garniture (50) lorsque le piston (52) n'est pas actionné.

4. Dispositif d'étanchement selon l'une des revendications 1 à 3, caractérisé en ce que des garnitures molles annulaires (48) sont mises en place sur les parois frontales du boîtier interne (46), qui rendent étanche le boîtier interne (46) contre les parois frontales du boîtier externe (2).

5. Dispositif d'étanchement selon l'une des revendications 2 à 4, caractérisé en ce qu'une chambre de pression annulaire (58) est disposée entre les deux pistons (52).

6. Dispositif d'étanchement selon l'une des revendications 2 à 5, caractérisé en ce que chacun des pistons (52) est rendu étanche par une garniture annulaire interne (56) radialement vers l'intérieur contre une douille de guidage (54) mise en place coaxialement à l'axe (24) et est rendu étanche par une garniture annulaire externe (56) radialement vers l'extérieur contre la surface interne du boîtier interne (46).

7. Dispositif d'étanchement selon la revendication 5, caractérisé en ce qu'une garniture élastique (68) est disposée dans la chambre de pression (58), laquelle étanchéifie la chambre de pression (58) vers l'extérieur.

8. Dispositif d'étanchement selon l'une des revendications 5 à 7, caractérisé en ce que les pistons (52) peuvent être actionnés par alimentation sous pression de la chambre de pression (58) avec un milieu.

9. Dispositif d'étanchement selon l'une des revendications 2 à 7, caractérisé en ce que des moyens élastiques (66, 72) sont disposés entre les pistons (52), par lesquels peuvent être actionnés les pistons (52).

10. Dispositif d'étanchement selon l'une des revendications 2 à 4, caractérisé en ce qu'entre les pistons (52) sont mis en place des éléments cunéiformes, mobiles radialement (74), par lesquels les pistons (52) peuvent être actionnés.

11. Dispositif d'étanchement selon la revendication 10, caractérisé en ce que les éléments cunéiformes (74) sont mobiles radialement vers l'intérieur par alimentation sous pression d'une chambre (6) entre le boîtier interne et le boîtier externe avec un milieu.

12. Dispositif d'étanchement selon la revendication 10, caractérisé en ce qu'un moyen élastique (86) est disposé autour des éléments cunéiformes (74), qui exerce sur les éléments cunéiformes (74) une force orientée radialement vers l'intérieur.

13. Dispositif d'étanchement selon la revendication 12, caractérisé en ce que le moyen élastique (86) comprend un anneau de ressort spiral précontraint.

14. Dispositif d'étanchement selon la revendication 12, caractérisé en ce que le moyen élastique (86) comprend un anneau précontraint en matière synthétique élastique.

15. Dispositif d'étanchement selon l'une des revendications 12 à 14, caractérisé en ce qu'entre la douille de guidage (54) et les éléments cunéiformes (74) sont disposés des moyens élastiques (82), qui s'appuient radialement vers l'intérieur sur la douille de guidage (54) et qui pressent radialement vers l'extérieur contre les éléments cunéiformes (74).

16. Dispositif d'étanchement selon l'une des revendications 1 à 15, caractérisé en ce que des surfaces d'appui, par lesquelles le boîtier interne (46) repose sur la lance (12), sont enduites d'une matière (92) qui réduit la résistance due au frottement des surfaces d'appui sur la lance (12).
